(19) Europäisches Patentamt / European Patent Office / Office européen des brevets

(11) **EP 2 188 960 B1**

(12) **FASCICULE DE BREVET EUROPEEN**

(45) Date de publication et mention de la délivrance du brevet:
**01.11.2017 Bulletin 2017/44**

(21) Numéro de dépôt: **08837705.6**

(22) Date de dépôt: **16.09.2008**

(51) Int Cl.:
**H04L 12/70** *(2013.01)*

(86) Numéro de dépôt international:
**PCT/FR2008/051658**

(87) Numéro de publication internationale:
**WO 2009/047440 (16.04.2009 Gazette 2009/16)**

(54) **SELECTION DE CANAUX ET ROUTAGE DANS UN RESEAU AD HOC EN FONCTION DE L'ALTERNANCE DES CANAUX**

KANALAUSWAHL UND ROUTING IN EINEM ADHOC-NETZWERK AUF BASIS VON KANALWECHSELN

CHANNEL SELECTION AND ROUTING IN AN AD HOC NETWORK BASED ON CHANNEL ALTERNATION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.09.2007 FR 0757721**

(43) Date de publication de la demande:
**26.05.2010 Bulletin 2010/21**

(73) Titulaire: **Orange**
**75015 Paris (FR)**

(72) Inventeurs:
• **TOHAM, Carine**
**F-44300 Nantes (FR)**
• **JAN, François**
**F-22560 Pleumeun Bodou (FR)**

(74) Mandataire: **Cabinet Plasseraud**
**66, rue de la Chaussée d'Antin**
**75440 Paris Cedex 09 (FR)**

(56) Documents cités:
**FR-A- 2 895 626        US-A1- 2004 022 223**
**US-A1- 2004 022 224**

• **DRAVES R ET AL: "ROUTING IN MULTI-RADIO, MULTI-HOP WIRELESS MESH NETWORKS" PROCEEDINGS OF THE 10TH. ANNUAL INTERNATIONAL CONFERENCE ON MOBILE COMPUTING AND NETWORKING. MOBICOM 2004. PHLADELPHIA, PA, SEPT. 26 - OCT. 1, 2004; [ANNUAL INTERNATIONAL CONFERENCE ON MOBILE COMPUTING AND NETWORKING], NEW YORK, NY : ACM, US, vol. CONF. 10, 26 septembre 2004 (2004-09-26), pages 114-128, XP001235027 ISBN: 978-1-58113-868-9**
• **HON SUN CHIU ET AL: "WSN15-2: J-CAR: an Efficient Channel Assignment and Routing Protocol for Multi-channel Multi-interface Mobile Ad Hoc Networks" GLOBAL TELECOMMUNICATIONS CONFERENCE, 2006. GLOBECOM '06. IEEE, IEEE, PI, 1 novembre 2006 (2006-11-01), pages 1-5, XP031075979 ISBN: 978-1-4244-0356-1**

**Description**

La présente invention concerne les traitements réalisés dans les réseaux de télécommunications. Elle s'applique particulièrement, mais non exclusivement, au cas des réseaux ad hoc.

Les réseaux ad hoc sont des réseaux de communication dépourvus d'infrastructure fixe. Un certain nombre de stations sans fil sont équipées de moyens d'émission et/ou réception de communications sans fil (par exemple sur ondes radio ou infrarouges)(encore appelés par la suite interfaces ou cartes réseau) et de protocoles adéquats pour former les noeuds du réseau ad hoc. Ces stations sont adaptées pour jouer le rôle de source, destination ou routeurs de communications. Elles peuvent prendre la forme d'ordinateurs fixes ou portables, de téléphones mobiles, de véhicules, d'appareils électroménagers, etc. Les moyens d'émission-réception peuvent aussi être associés à des objets simples tels que des capteurs ou des actionneurs.

Lorsque un noeud A et un noeud B du réseau ne sont pas à portée l'un de l'autre (c'est-à-dire qu'une onde émise par l'un des noeuds n'est pas reçue par l'autre noeud), les données d'une communication provenant du noeud A et à destination du noeud B sont émises par le noeud A, puis relayées jusqu'au noeud B par des noeuds intermédiaires successifs choisis grâce à un protocole de routage. Deux noeuds intermédiaires successifs seront tels qu'ils communiquent directement l'un avec l'autre et le lien existant entre eux est appelé saut. Il peut ainsi exister plusieurs sauts entre les noeuds A et B s'ils utilisent plusieurs noeuds intermédiaires. L'ensemble de ces sauts constitue la route pour la communication du noeud A vers le noeud B.

Lorsqu'un noeud comporte une carte réseau à laquelle un canal a été affecté, le noeud peut émettre et recevoir sur ce canal.

Lorsqu'un noeud utilise un unique canal pour relayer les données d'un autre noeud, il est obligé d'attendre d'avoir totalement reçu ces données constituées de paquets de communication avant de commencer à envoyer le premier paquet vers le prochain noeud, parce qu'une carte réseau ne peut pas fonctionner simultanément en réception et en émission. Cela cause donc une diminution du débit de la communication qui est en fait divisé par 2 à chaque saut utilisé pour router des paquets d'une source vers une destination. De plus, il est difficile d'établir des communications simultanées à cause des interférences qui croissent avec le nombre de noeuds partageant un même canal.

Lorsque plusieurs bandes de fréquences sont utilisées pour envoyer des données dans le réseau, on parle de réseau multicanaux. Par ailleurs, le réseau est dit multi-interface s'il comprend des noeuds équipés de plusieurs cartes réseaux (interfaces).

Le fait d'utiliser plusieurs interfaces et plusieurs canaux dans un réseau ad hoc contribue à augmenter le débit global du réseau, en favorisant la simultanéité des communications et en évitant la chute du débit due au fait qu'un noeud ne peut pas émettre et recevoir en même temps.

Les protocoles de routage utilisés dans les réseaux ad hoc ne sont pas vraiment appropriés aux réseaux ad hoc multicanaux et multi-interfaces. Ces protocoles de routage, tels que AODV (en anglais « Ad hoc On Demand Distance Vector ») ou OLSR (en anglais « Optimized Link State Routing Protocol ») standardisés à l'IETF (abréviation bien connue de l'homme du métier de l'expression anglaise "Internet Engineering Task Force"), privilégient le nombre de sauts lors du choix de la route parmi plusieurs routes candidates pour acheminer des données entre deux noeuds. Or une route utilisant 4 sauts et 3 canaux pourrait être meilleure en termes de débit utile qu'une route utilisant 3 sauts mais 1 seul canal. Réduire le nombre de sauts permet certes de réduire les ressources consommées, mais augmenter le nombre de canaux sur une route permet l'amélioration du débit utile du réseau.

Ainsi les techniques mises en oeuvre dans le routage associées à l'utilisation des réseaux ad hoc multicanaux et multi-interfaces influent sur l'augmentation de débit.

D'autre part, l'affectation des canaux aux différentes interfaces dans un réseau multicanaux et multi-interfaces influe également sur les performances du réseau.

Plusieurs solutions de sélection des canaux existent, comme celle exposée dans « Routing and Interface Assignment in Multi-Channel Multi-Interface Wireless Networks », Pradeep Kyasanur and Nitin H. Vaidya, In IEEE Wireless Communications and Networking Conference (WCNC), New Orleans, LA, March 2005, qui combine une affectation statique dans laquelle les interfaces sont associées à des canaux fixes respectifs pendant une longue période (interfaces fixes), et une affectation dynamique où les interfaces commutent sur différents canaux à la demande (interfaces commutables). Un noeud possède des interfaces fixes qui assurent qu'il est toujours joignable sur les canaux associés et des interfaces commutables qui lui permettent de balayer l'ensemble des canaux du spectre en fonction des noeuds qu'il veut joindre. Cependant une telle solution introduit une latence dans la transmission des paquets sur les interfaces commutables, car avant de traiter un paquet, il faut que l'interface se règle sur le canal adéquat si elle utilisait un canal différent avant l'arrivée du paquet.

Une autre solution est de choisir périodiquement le canal d'émission d'un noeud vers son voisin, dans un réseau où les noeuds n'ont que des interfaces fixes, comme proposé dans « A multi-radio unification protocol for IEEE 802.11 wireless networks », A. Adya, P. Bahl, J. Padhye, A.Wolman, and L. Zhouin Broadnets, 2004. Chaque noeud choisit alors localement le canal commun le moins chargé pour émettre vers chacun de ses voisins. D'autres exemples de modes de réalisation de l'art antérieur peuvent être trouvé dans Draves R et al « Routing in multi-radio multi-hop wireless mesh networks » XP001235027 et dans la demande FR 2 895 626 A.

Il existe ainsi un besoin de solutions de sélection de routes et/ou de sélection de canaux tirant pleinement partie de la diversité fréquentielle inhérente à ce type de réseau et permettant ainsi d'augmenter le débit utile dans les réseaux ad hoc multi-interfaces et multicanaux.

L'invention a pour objet un procédé de sélection d'une route selon la revendication 1.

Un procédé selon l'invention propose ainsi une métrique de routage dans un réseau ad hoc qui permet aux protocoles de routage existants de s'adapter aux réseaux multi-interfaces et multicanaux en leur faisant prendre en compte l'aptitude du noeud à émettre et recevoir des données de manière simultanée, et en favorisant l'alternance des canaux sur les routes déterminées pour les communications. Le débit utile dans un réseau ad hoc multi-interfaces et multicanaux mettant en oeuvre l'invention est accru.

En effet, il ne suffit pas d'utiliser plusieurs canaux (le meilleur en termes de qualité) sur une route, mais il faut également les alterner autant que possible afin de favoriser le débit du réseau.

Dans un mode de réalisation de la revendication 2, la métrique est en outre fonction d'un deuxième paramètre indiquant la charge et/ou la qualité de la route. Une telle disposition permet ainsi de réaliser un compromis dans le choix de la route entre au moins la charge et/ou qualité de la route et la hausse du débit utile du réseau.

Dans un mode de réalisation de la revendication 3, la métrique est en outre fonction d'un troisième paramètre indiquant le nombre de noeuds de la route (on notera qu'en pratique, c'est le nombre de sauts qui est pris en compte). Une telle disposition permet ainsi de réaliser un compromis dans le choix de la route entre au moins la hausse du débit utile du réseau et les ressources du réseau consommées.

Dans un mode de réalisation de la revendication 4, un procédé selon l'invention comprend une étape de choix d'un canal entre un noeud intermédiaire source et un noeud intermédiaire destinataire d'une route. Les noeuds intermédiaires source et destinataire sont des noeuds successifs de la liste ordonnée définissant la route.

Lors de l'étape de choix, le noeud intermédiaire destinataire, respectivement source, transmet au noeud intermédiaire source, respectivement destinataire, un message comprenant au moins un canal préféré. Un canal préféré est un canal associé à chacun des noeuds intermédiaires source et destinataire et non attribué pour l'émission, respectivement pour la réception, d'une communication par le noeud intermédiaire destinataire, respectivement source.

Une telle méthode de sélection des canaux utilisés entre des noeuds successifs d'une route définie pour la mise en oeuvre d'une communication permet d'augmenter le débit du réseau, en évitant qu'un noeud ait à recevoir et à émettre des paquets de données sur la même interface.

Dans un mode de réalisation de la revendication 5, lors de l'étape de choix, le noeud intermédiaire source, respectivement destinataire, choisit en priorité comme canal d'émission du noeud intermédiaire source vers le noeud intermédiaire destinataire, l'un des canaux préférés qui n'est pas attribué au noeud intermédiaire source, respectivement destinataire pour recevoir, respectivement émettre, une communication. En répétant ces étapes de noeud en noeud, les canaux retenus permettent que la route associée puisse fournir un débit accru.

Dans un mode de réalisation de la revendication 6, l'établissement d'une route depuis le noeud destinataire vers le noeud source comprend les étapes suivantes :

- ordonnancement en sens inverse des noeuds de la liste définissant la route sélectionnée depuis le noeuds source vers le noeuds destinataire ;
- définition de la route depuis le noeud destinataire vers le noeud source par la liste ordonnée en sens inverse, le canal choisi pour émettre entre deux noeuds successifs de la liste ordonnée en sens inverse étant choisi en priorité différent du canal choisi entre les deux noeuds successifs pour la route depuis le noeud source vers le noeud destinataire..

Cette disposition permet de façon rapide et simple, de sélectionner un ensemble de noeuds intermédiaires et des canaux à utiliser par ces noeuds, permettant d'accroître le débit utile du réseau, lorsqu'une communication doit être établie depuis un noeud B vers un noeud A tandis qu'une route a déjà été sélectionnée pour la communication depuis le noeud A vers le noeud B.

Suivant un second aspect, l'invention propose une station correspondante selon la revendication 7. Suivant un troisième aspect, l'invention propose un programme d'ordinateur correspondant selon la revendication 8. Suivant un quatrième aspect, l'invention propose un support d'enregistrement correspondant selon revendication 9. D'autres caractéristiques et avantages de l'invention apparaîtront encore à la lecture de la description qui va suivre. Celle-ci est purement illustrative et doit être lue en regard des dessins annexés sur lesquels :

- la figure 1 représente un réseau dans un mode de réalisation de l'invention ;
- la figure 2 représente un noeud N dans un mode de réalisation de l'invention ;
- la figure 3 représente une table d'informations d'un noeud dans un mode de réalisation de l'invention ;

- la figure 4 illustre le calcul d'un paramètre de la métrique de sélection de route dans un mode de réalisation de l'invention.

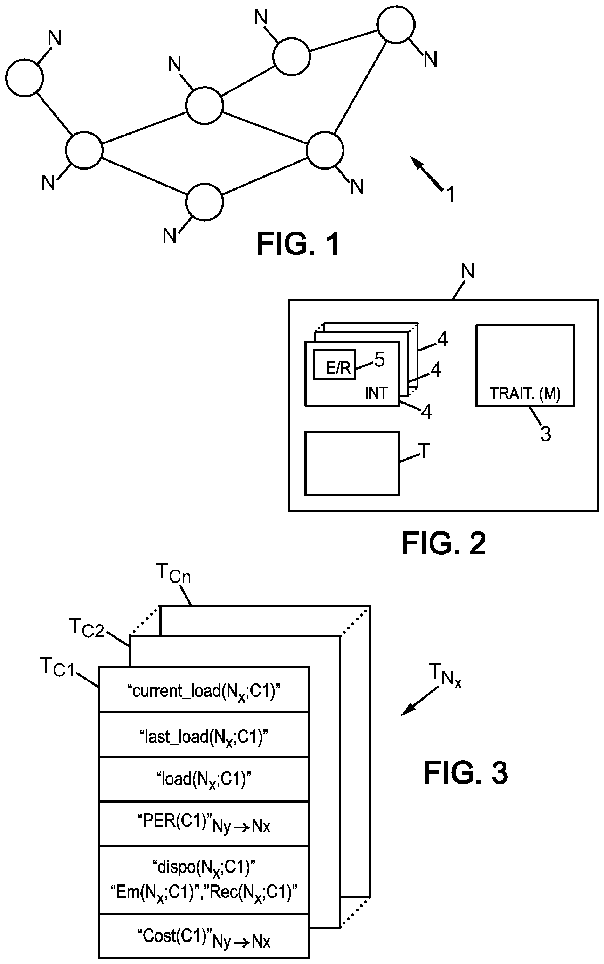

Sur la figure 1 est représenté un réseau 1 de communications sans fil, dans le cas considéré, un réseau ad hoc, comportant une pluralité de stations émettrices-réceptrices N destinées à constituer chacune un noeud du réseau 1.

Dans le cas considéré, il s'agit de communications radio. Néanmoins, l'invention est applicable à d'autres moyens de communication sans fil, par exemple par infrarouge etc.

En référence à la figure 2, chaque noeud N comporte un nombre d'interfaces (par exemple des cartes réseaux WiFi (marque déposée)) compris entre 1 et K (avec K entier strictement supérieur à 1).

Dans le mode de réalisation considéré, des noeuds N du réseau 1 ont des nombres d'interfaces différents.

Chaque interface 4 comporte un module d'émission/réception 5 qui assure les traitements de couche physique et de couche de liaison (couches 1 et 2 du modèle OSI ("Open Systems Interconnection")) en vue d'échanger avec des noeuds à portée radio des signaux émis ou reçus depuis une antenne radio (non représentée) dont est muni le noeud N, par l'intermédiaire d'un canal radio affecté à l'interface.

Dans une phase initiale, chaque noeud N du réseau affecte un canal radio respectif à chacune de ses interfaces 4 parmi un groupe de M canaux orthogonaux déterminés (c'est-à-dire M bandes de fréquence du spectre qui ne se chevauchent pas et n'interfèrent pas les unes avec les autres). Par exemple, ces M canaux sont les 12 canaux définis par la norme IEEE 802.11a. Dans un autre mode de réalisation, ces M canaux sont les 3 canaux définis par la norme IEEE 802.11b.

Dans le mode de réalisation considéré, certains au moins des noeuds N comportent plusieurs interfaces 4. Ils sont donc adaptés pour communiquer en parallèle sur des canaux distincts. Par exemple un même noeud peut être en train de recevoir un paquet P1 de la communication C1 à l'aide d'une première interface pendant qu'il envoie un paquet P2 pour la communication C2 à l'aide d'une deuxième interface (ou bien recevoir un paquet P1 de C1 et envoyer un paquet P1' de C1).

On notera qu'une même interface ne peut fonctionner en même temps en émission et en réception.

Chaque noeud N comporte également un module de traitement 3.

En outre, une des interfaces de chaque noeud N est affectée à un canal C1 commun à tous les noeuds du réseau. Ainsi un noeud N qui a une seule interface utilisera automatiquement le canal C1.

Dans le mode de réalisation considéré, les canaux sont affectés aux interfaces de façon fixe.

Chaque noeud N comporte une mémoire dans laquelle est stockée et mise à jour une table d'informations T comportant des informations relatives aux interfaces du noeud N et aux canaux qui leur ont été respectivement affectés.

Considérons en référence à la figure 3 la table d'informations $T_{Nx}$ d'un noeud Nx parmi les noeuds N. Le noeud Nx considéré comporte L interfaces 4 : $Int_1$, $Int_2$, ..., $Int_L$ (n étant compris entre 1 et K). Chaque interface $Int_i$ a été affectée, dans une phase initiale, à un canal radio respectif Ci, pour i =1 à L, par le noeud Nx.

La table d'information $T_{Nx}$ comprend L sous-tables d'informations $T_{C1}$, $T_{C2}$, ..., $T_{CL}$ dédiées chacune à une interface respective.

Le noeud Nx enregistre et met à jour, dans chaque sous-table d'informations $T_{Ci}$ pour i=1 à L, plusieurs informations relatives à l'interface $Int_i$ et au canal Ci affecté à cette interface :

- la variable « current_load (Nx ; Ci) » qui représente le volume courant des paquets que le noeud Nx a perçus sur le canal Ci. Un paquet est considéré comme perçu sur un canal Ci lorsque le noeud Nx l'envoie ou le reçoit, que ce paquet lui soit destiné ou pas et que le noeud réussisse à le décoder ou non. La variable « current_load (Nx; Ci) » est réinitialisée à la valeur nulle toutes les T1 périodes.
- la variable « last_load(Nx ; Ci) » qui est égale à la valeur de la variable « current_load(Nx ;Ci)» avant la dernière réinitialisation de la variable « current_load Nx ; (Ci)» ;
- la variable « load(Nx ; Ci) » représentant la charge du canal Ci vue par le noeud Nx et calculée ainsi par celui-ci : $load(N;C) = \lambda \times current\_load(N;C) + (1 - \lambda) \times last\_load(N;C)$, où $\lambda$ est un poids déterminé commun à l'ensemble des noeuds ;
- les variables « $PER(Ci)_{Ny \to Nx}$ » ; il y a autant de variables relatives au canal Ci que de noeuds Ny voisins du noeud Nx (c'est-à-dire de noeuds Ny à portée radio du noeud Nx) ; la variable « $PER(Ci)_{Ny \to Nx}$ » représente le taux d'erreur (en anglais « Packet Error Rate ») dans le sens de transmission depuis le noeud Ny vers le noeud Nx sur le canal Ci, de paquets particuliers nommés « Probe » et décrits ci-dessous.
- la variable « dispo(Nx ; Ci) », qui évalue la disponibilité de l'interface $Int_i$ utilisant le canal Ci. Cette variable prend en compte les communications en cours dans lesquelles l'interface $Int_i$ est déjà engagée: c'est la bande passante résiduelle de l'interface $Int_i$. Une manière simple d'évaluer cette variable « dispo(Ci) » est de dire qu'elle est égale au nombre de communications en cours utilisant l'interface $Int_i$ auquel on ajoute autant de fois la valeur 1 qu'il y a de communications qui utilisent l'interface $Int_i$ en émission et/ou en réception. D'autres méthodes plus complexes peuvent convenir;

- les variables Em(Nx ; Ci) et Rec(Nx ; Ci) qui représentent les statuts du canal Ci: Em(Nx ; Ci) est égal à 1 si le canal Ci a été attribué pour l'émission, par le noeud Nx, des données d'une ou plusieurs communications en cours lors de l'établissement des routes correspondantes et Em(Nx ; Ci) est égal à 0 sinon. Similairement, Rec(Nx ; Ci) est égal à 1 si le canal Ci a été attribué pour la réception par le noeud Nx des données d'une ou plusieurs communications en cours lors de l'établissement des routes correspondantes et Rec(Nx ; Ci) est égal à 0 sinon.
- les variables « Cost(C$_i$)$_{Ny->Nx}$ » qui représentent le coût du canal Ci pour les transmissions depuis un noeud Ny voisin vers le noeud Nx. Il y a autant de variables « Cost(Ci)$_{Ny->Nx}$ » relatives au canal Ci que de noeuds Ny voisins du noeud Nx. Une méthode de calcul de ces variables est décrite ci-dessous. D'autres méthodes peuvent néanmoins convenir.

L'état d'un canal Ci vu du noeud Nx est caractérisé par trois aspects :

- la charge load(Nx ;Ci) ;
- les taux d'erreurs des paquets (variables « PER(Ci)$_{Ny->Nx}$ ») sur le canal Ci relatif au sens de transmission de chaque voisin Ny vers le noeuds Nx ;
- la disponibilité (variable « dispo(Nx ; Ci) ») de l'interface Int$_i$ associée au canal Ci.

Le coût du canal Ci, vu du noeud Nx, pour la transmission d'un noeud voisin Ny vers le noeud Nx est calculé par le noeud Nx à l'aide d'une somme pondérée de ces trois variables caractérisant l'état du canal Ci vu du noeud Nx, selon la formule suivante où $\alpha$, $\beta$ et $\gamma$ sont des poids déterminés communs à l'ensemble des noeuds N :

$$Cost(Ci)_{Ny->Nx} = \alpha \times PER(Ci)_{Ny->Nx} + \frac{1}{2}\beta \times (load(Nx;Ci) + load(Ny;Ci)) + \gamma \times dispo(Ci)$$

Les noeuds N calculent les taux d'erreur de paquets à l'aide de messages qu'ils échangent entre eux. En effet, chaque noeud N envoie régulièrement (toutes les T2 périodes), sur chacun des canaux affectés à ses interfaces, des messages "hello" de couche MAC. Ces messages sont également nommés « Probe ».

Ces messages ont pour but de sonder l'entourage du noeud N, de lui faire connaître notamment les noeuds voisins, l'identification et l'état des canaux qui leur sont communs ainsi que de calculer des informations diverses comme les coûts de transmission entre noeuds voisins. Le lien entre deux noeuds sur un canal radio donné n'est considéré comme existant et fiable que si ces deux noeuds ont reçu des probes l'un de l'autre par l'intermédiaire de ce canal.

Outre le fait que la réception de messages « Probe » fournit à un noeud l'indication des canaux qu'il a en commun avec chacun de ses noeuds voisins ainsi que l'identification de ces noeuds voisins, un message « Probe» envoyé sur un canal C par un noeud N donné contient les informations suivantes :

- le nombre total de messages « Probe » envoyés jusqu'à présent par le noeud N sur ce canal C, représenté par la variable « *Nbre_Probes_envoyés_par_N_sur_C* » ;
- la charge du canal C dans l'entourage du noeud N, représentée par la variable « load(N ; C)» et figurant dans la sous-table d'informations du noeud N relative au canal C (dans un autre mode de réalisation, la variable « load(N ; C)» n'est pas stockée dans cette sous-table, mais est calculée par le noeud N juste avant l'envoi du message « Probe »).

Lorsqu'un noeud Nx reçoit un message « Probe » d'un noeud voisin Ny sur le canal Ci, il incrémente un compteur comptabilisant le nombre de messages « Probes » reçus de ce voisin Ny sur ce canal Ci, représenté par la variable « *Nbre_Probes_de_Ny_reçus_ par_Nx_sur_Ci* ».

Dans une étape suivante, le noeud Nx met à jour la valeur de la variable « PER(Ci)$_{Ny->Nx}$ » figurant (en %) dans la sous-table d'informations du noeud N relative au canal Ci à l'aide la formule suivante :

$$PER(Ci)_{Ny->Nx} = 100 - \frac{Nbre\_Probes\_de\_Ny\_reçus\_par\_Nx\_sur\_Ci}{Nbre\_Probes\_envoyés\_par\_Ny\_sur\_Ci} \times 100$$

Ainsi le nombre de messages « Probe » reçus d'un voisin Ny par un noeud Nx fait évoluer les valeurs du taux d'erreur de paquets et du coût du canal Ci vu par le noeud Nx pour le sens de transmission du noeud Ny vers le noeuds Nx.

Ainsi si deux noeuds sont considérés comme voisins suite au mécanisme de découverte de voisinage inclus dans le protocole de routage et qu'ils n'ont pourtant pas échangés de messages « Probe », on associe au canal correspondant un PER de 100% : on favorise ainsi les liens fiables pour le choix de la route.

Il va maintenant être décrit des modes de réalisation, en vue de la détermination d'une route entre deux noeuds du réseau 1, de la sélection de canaux dans la détermination de routes candidates entre ces deux noeuds et de la sélection d'une route parmi plusieurs routes candidates.

Ces sélections sont réalisées à l'aide des variables décrites plus haut.

Dans un premier exemple, des procédés de sélection de canaux et sélection de routes dans un mode de réalisation sont décrits dans le cas de protocoles de routage réactifs. Ces protocoles déterminent les routes lorsqu'il y a un besoin d'établissement d'une route pour une communication.

Dans un deuxième exemple, des procédés de sélection de canaux et sélection de routes dans un mode de réalisation sont décrits dans le cas de protocoles de routage proactifs. Ces protocoles déterminent les routes à l'avance, qu'il y ait un besoin d'établissement d'une communication ou non.

**Exemple de réalisation dans les protocoles réactifs :**

Considérons un noeud A qui veut envoyer des données à un noeud B qui est hors de sa portée radio, les noeuds A et B faisant partie des noeuds N du réseau 1. Afin que la communication Com1 destinée à envoyer ces données puisse être établie, le noeud A doit trouver une route entre le noeud B et lui-même, pour établir cette communication Com1.

Le noeud A envoie une requête de route à l'aide d'un paquet "Route Request" qu'il diffuse à ses voisins sur le canal commun C1. Chaque noeud voisin rediffuse alors ce paquet à ses propres voisins sur le canal C1, jusqu'à atteindre le noeud B de destination.

Le noeud B va ensuite générer un paquet "Route Reply" sur le canal C1 en réponse à tous les paquets "Route Request" qu'il aura reçus.

Pour tout paquet "Route Request" transmis par un noeud Nk voisin du noeud de destination B, le noeud B retourne sur le canal C1 un paquet "Route Reply" dans lequel :

a/ Il insère et initialise des variables « alter », « coût_canaux » et la variable « nbre_sauts » à la valeur 0.

b/ il indique tous les canaux Cj qu'il a en commun avec le noeud Nk sauf le(s) canal (ux) enregistré(s) dans sa table d'informations comme canal (ux) d'émission (c'est-à-dire les canaux C tels que la variable « Em(B ; C) » est égale à 1). Il indique en outre les coûts associés à ces canaux communs indiqués pour les transmissions du noeud Nk vers le noeud B sur ces canaux (c'est-à-dire les valeurs des variables « $Cost(Cj)_{Nk->B}$ »).

c/ Si tous les canaux que le noeud B a en commun avec le noeud Nk sont inclus dans les canaux d'émission du noeud B, il les inclut tous, ainsi que leurs coûts, dans le paquet "Route Reply". Dans ce dernier cas, quelque soit le canal choisi plus tard par le noeud Nk pour émettre les données de la communication Com1, ce choix obligera le noeud B à émettre et recevoir sur ce même canal : B incrémente de 1 la variable « alter » du paquet "Route Reply".

d/ Le noeud B transmet le paquet "Route Reply" au noeud Nk sur le canal C1.

Lorsque le noeud intermédiaire Nk reçoit le paquet "Route Reply" transmis par le noeud B :

e/ Si le noeud B ne lui a proposé qu'un seul canal dans le paquet « Route Reply », le choix est fait : c'est ce canal proposé que le noeud Nk affectera à l'émission des paquets de la communication Com1 ; il incrémente la variable « alter » contenue dans le paquet « Route Reply » de 1 si ce canal est marqué dans sa table d'informations comme canal utilisé en réception.

f/ Si plus d'un canal a été proposé par le noeud B, le noeud Nk choisit comme canal d'émission vers le noeud B pour les paquets de la communication Com1 de préférence un canal différent du(es) canal (ux) marqué(s), dans sa propre table d'informations, comme canal (ux) utilisé(s) en réception.

S'il existe plusieurs canaux vérifiant cette condition, il choisit celui associé au coût minimum.

S'il n'existe pas de canaux vérifiant la condition, il choisit le canal de coût minimum parmi les canaux proposés et incrémente de 1 la variable « alter » contenue dans le paquet « Route Reply ».

g/ le noeud Nk affecte la valeur 1 à la variable Em relative au canal choisi, si sa valeur était 0.

h/ Il met à jour la valeur de la variable « nbre_sauts » en l'incrémentant de 1.

i/ Il met à jour la valeur de la variable « coût_canaux » dans le paquet "Route Reply" en lui ajoutant le coût du canal choisi comme canal d'émission vers le noeud B pour les paquets de la communication Com1 (i.e. il ajoute la valeur « $Cost(C)_{Nk->B}$ » si le canal C a été choisi par le noeud Nk).

j/ Puis il effectue vis-à-vis du noeud Nk-1 les étapes b/ à d/ précédemment effectuées par le noeud B vis-à-vis du noeud Nk, le noeud Nk-1 étant un noeud voisin du noeud Nk tel que le noeud Nk a reçu un paquet "Route Request" du noeuds Nk-1.

Le noeud Nk en fait de même pour tous les noeuds voisins desquels il aura reçu des paquets "Route Request".

Le noeud Nk-1 effectue ensuite à son tour les étapes e/ à j/.

Et ce traitement est réitéré pour tous les noeuds intermédiaires jusqu'à atteindre le noeud A source.

Lorsqu'un paquet "Route Reply" est reçu par le noeud A, ce dernier effectue alors les étapes e/ à i/.

Supposons que ce paquet «Route Reply » a ainsi été traité par le noeud B, puis les k noeuds intermédiaires Nk, Nk-1, ..., N1 et enfin le noeud A.

La variable « coût_canaux » indique alors la somme des coûts liés aux canaux choisis sur chaque saut entre noeuds successifs ayant traité le paquet « Route Reply ». Elle indique donc le coût total de la route, pour l'aspect qualité des canaux, correspondant aux noeuds successifs A, N1, ..., Nk-1, Nk et B et aux canaux choisis lors du traitement.

La variable « nbre_sauts » indique le nombre total de sauts de cette route.

La variable « alter » représente le nombre total de fois où la situation suivante arrivera sur la route considérée : un noeud émet et reçoit des données sur un même canal.

Puis le noeud A calcule la valeur d'une métrique pour la route considérée.

Dans le mode de réalisation décrit, la valeur de la métrique M calculée par le noeud A pour la route considérée est :

$$ M = \theta_1 \times nbre\_sauts + \theta_2 \times coût\_canaux + \theta_3 \times alter \, , $$

où $\theta_1$, $\theta_2$ et $\theta_3$ sont des poids déterminés, de valeurs communes aux noeuds du réseau 1.

Dans les modes de réalisation considérés, $\theta_1$ est strictement supérieur à 0 et très inférieur à $\theta_2$ lui-même très inférieur à $\theta_3$.

Chaque paquet « Route Reply » traité par le noeud source A correspondra à une nouvelle route candidate pour établir la communication Com1.

Le noeud A sélectionnera parmi ces routes candidates celle pour laquelle la plus petite valeur de métrique M aura été calculée.

Les canaux affectés à la communication Com1 par les noeuds des routes candidates non sélectionnées par le noeud A sont ensuite « libérés » (le champ « Em(C) » sera remis à 0 si le canal C n'était pas effectivement utilisé en émission pour la mise en oeuvre de la communication Com1).

Un protocole de routage utilisant cette métrique M pour choisir les routes effectivement utilisées pour établir une communication favorise le débit utile du réseau.

Par ailleurs, un réseau mettant en oeuvre un procédé de sélection de canaux pour les routes tel que décrit ci-dessus favorise également le débit utile du réseau.

Si le noeud B a besoin de répondre au noeud A, le noeud B doit trouver une route entre le noeud A et lui-même, pour établir la communication correspondante Com2. Le noeud B garde les mêmes noeuds intermédiaires que ceux sélectionnés pour la communication Com1. La route sélectionnée pour la communication Com2 sera alors dans l'ordre : le noeud B, puis le noeud Nk, le noeud Nk-1, ...,N1 puis le noeud A (si la route sélectionnée pour la communication Com1 était constituée dans l'ordre des noeuds A, N1, ..., Nk-1, Nk et B).

En outre, le noeud B choisit parmi les canaux qu'il a en commun avec Nk, le meilleur canal existant, si possible différent de celui (ceux) sur lequel (s) il reçoit des données, notamment de Nk. Si tous les canaux communs entre les deux noeuds sont utilisés en réception par B, il choisira celui perçu par B (c'est-à-dire dans le sens de communication Nk->B) comme ayant le moindre coût. Concrètement si B avait proposé comme canaux C2 et C3 à Nk, parce que c'était les deux seuls canaux communs entre les deux noeuds, et que Nk avait choisi le canal C2 pour émettre vers B, B lui enverra les données de la communication Com2 sur le canal C3 si B n'utilise pas C3 en réception; sinon B choisira entre C2 et C3 celui ayant un coût minimum dans sa table d'informations. Par contre si B et Nk n'ont que le seul canal C1 en commun, ce canal C1 sera utilisé aussi bien dans le sens de communication Nk->B que B->Nk.

Dans le mode de sélection des canaux décrit ci-dessus, un noeud donné (par exemple Nk) propose au noeud (Nk-1) qui le précède sur la route un ou des canaux pour l'émission par ce noeud qui précède (Nk-1) des données de la communication à établir. Le noeud (Nk-1) qui précède choisit alors son canal d'émission parmi ceux proposés par le noeud donné (Nk).

Dans un autre mode de réalisation, le procédé de sélection des canaux est mis en oeuvre dans l'autre sens. Un noeud donné (par exemple Nk-1) propose au noeud (Nk) qui le suit sur la route un ou des canaux pour la réception par ce noeud qui suit (Nk) des données de la communication à établir. Le noeud qui suit (Nk) choisit alors son canal de réception parmi ceux proposés par le noeud donné (Nk-1).

**Exemple de réalisation dans les protocoles proactifs :**

Dans ce cas, les routes sont trouvées à l'avance grâce à des tables de routage stockées par chaque noeud et régulièrement mises à jour à travers la diffusion périodique de messages de contrôle.

*Informations supplémentaires sur le voisinage :*

Un type de message de contrôle est par exemple le message de type « hello » de niveau IP (Internet Protocol) qui permet à chaque noeud de découvrir son voisinage.

Si un noeud n'a encore rien reçu de ses voisins (il est donc le premier), il indique les informations supplémentaires suivantes dans un message « hello » qu'il transmet sur le canal commun C1 :

- tous les canaux qu'il n'utilise pas effectivement en émission (c'est-à-dire les canaux C tels que Em(C) soit égal à 0 dans sa table d'informations), ainsi que leurs coûts (pour tous ses voisins) et le coût correspondant au canal commun C1 (pour tous ses voisins). Le noeud propose ainsi à ses voisins les canaux qu'il peut utiliser en réception.

Lorsqu'un noeud Nx reçoit un tel message "hello" d'un voisin Ny, il collecte les informations suivantes :

- si aucun des canaux proposés dans le message « hello » par le noeud Ny ne se trouve affecté aux interfaces du noeud Nx, ce dernier enregistre dans sa table d'information $T_{Nx}$ le canal commun C1 comme canal d'émission vers le voisin Ny et le coût correspondant (c'est-à-dire $Cost(C1)_{Nx->Ny}$) indiqué dans le message « hello » reçu.

Sinon, le noeud Nx choisit comme canal d'émission vers le noeud Ny un canal, parmi les canaux proposés, qui est affecté à une interface du noeud Nx et qui est différent du (des) canal (ux) déjà attribué(s) par le noeud Nx à la réception de données de communications en cours. S'il en existe plusieurs, le noeud Nx choisit celui associé au coût minimum indiqué dans le message « hello » reçu. S'il n'en existe pas, le noeud Nx choisit parmi les canaux proposés le canal attribué à une interface du noeud Nx et associé au coût minimum dans le message « hello » reçu du noeud Ny.

Le noeud Nx enregistre alors dans sa table d'informations le canal C choisi pour émettre vers son voisin Ny et le coût associé. Ce canal C ne sera effectivement considéré comme canal d'émission que lorsqu'il sera engagé dans une communication.

Si l'interface associée au canal finalement choisi pour émettre vers le noeud Ny a également été attribuée pour la réception par le noeud Nx des données d'une communication en cours, le noeud Nx incrémente une variable « alter(Nx) », qui est stockée au niveau du noeud Nx.

*Mise à jour des tables de routage :*

Chaque noeud doit déterminer la « meilleure » route vers toutes les destinations possibles du réseau, qui est stockée dans une table de routage tenue à jour par le noeud.

La table de routage indique une ou plusieurs destinations.

Pour chacune de ces destinations, la table de routage indique :

- une valeur de métrique M calculée pour la « meilleure » route respective déterminée vers la destination ;
- l'identification d'un noeud voisin comme prochain saut vers la destination.

A des fins de mise à jour de leur table de routage, les noeuds disséminent les informations de voisinage dont ils disposent dans tout le réseau. En fonction de la méthode utilisée pour ce faire, on subdivise les protocoles proactifs en deux sous-catégories : les protocoles proactifs à vecteur de distance et les protocoles proactifs à état de liens.

*-> Mise à jour des tables de routage dans le cas des protocoles proactifs à vecteur de distance*

Dans cette sous-catégorie de protocoles de routage, les noeuds utilisent également les messages « hello » précédents pour disséminer les informations de voisinage et mettre à jour les tables de routage.

Ainsi, chaque noeud diffuse périodiquement, outre les informations déjà indiquées précédemment, le contenu de sa table de routage à travers ses messages « hello ».

Lorsqu'un noeud Nx reçoit un message « hello » d'un noeud voisin Ny :

- si une destination D apparaît dans la table de routage de Ny telle qu'indiquée dans son message « hello », et qu'elle n'existe pas dans la table de routage du noeud Nx, ce dernier enregistre cette nouvelle destination D dans sa table de routage, avec le noeud Ny comme prochain saut vers la nouvelle destination D. La valeur $M(Nx \rightarrow D)$ de la métrique de routage M pour la route retenue du noeud Nx vers la destination D est calculée en ajoutant la valeur $M(Nx \rightarrow Ny)$ à la valeur $M(Ny \rightarrow D)$ de la métrique de routage indiquée dans le message « hello » envoyé par le noeud Ny pour la route du noeud Ny vers la destination D, la valeur $M(Nx \rightarrow Ny)$ étant déterminée selon la formule suivante : $M(Nx \rightarrow Ny) = \theta_1 \times 1 + \theta_2 \times Cost(Ci)_{Nx\text{->}Ny} + \theta_3 \times alter(Nx)$, où Ci est le canal enregistré dans la table d'informations du noeud Nx comme canal à utiliser pour une éventuelle émission vers le noeuds Ny, et $\theta_1$, $\theta_2$ et $\theta_3$ sont des poids déterminés, de valeurs communes aux noeuds du réseau 1 ; la valeur $M(Nx \rightarrow D) = M(Nx \rightarrow Ny) + M(Ny \rightarrow D)$ de la métrique M pour la route du noeud Nx vers la destination D est mémorisée dans la table de routage du noeuds Nx.

- pour une destination D qui est indiquée dans la table de routage du noeud Ny transmise dans le message « hello » et qui existe déjà dans la table de routage du noeud Nx :

    o si dans la table de routage du noeud Nx, la destination D est déjà associée au noeud Ny comme prochain saut vers la destination D, le noeud Nx calcule la valeur $M(Nx \rightarrow D)$ de la métrique M pour la route du noeud Nx vers la destination D de la façon indiquée précédemment et actualise ensuite la valeur de la métrique M stockée dans sa table de routage.
    o si dans la table de routage du noeud Nx, la destination D est associée à un noeud Nz différent du noeud Ny comme prochain saut vers la destination D, alors le noeud Nx calcule la valeur $M(Nx \rightarrow Ny) + M(Ny \rightarrow D)$ de la métrique M pour la route du noeud Nx vers la destination D de la façon indiquée précédemment, le noeud Nx compare cette valeur de métrique à celle stockée dans la table de routage pour la destination D (correspondant à une route débutant par le saut entre Nx et Nz). Si la valeur $M(Nx \rightarrow Ny) + M(Ny \rightarrow D)$ est inférieure à celle stockée dans la table de routage correspondant au prochain saut Nz vers D, le noeud Nx remplace, dans sa table de routage, l'identification du noeud Nz par l'identification du noeud Ny comme prochain saut vers la destination D, et il mémorise la valeur $M(Nx \rightarrow Ny) + M(Ny \rightarrow D)$ comme valeur de métrique pour la route vers la destination D. Si la valeur $M(Nx \rightarrow Ny) + M(Ny \rightarrow D)$ est supérieure à celle stockée dans la table de routage correspondant au prochain saut Nz vers D, le noeud Nz est maintenu comme prochain saut vers la destination D, le but étant de garder la route vers D qui possède la plus petite valeur de métrique.

La métrique M pour une route est ainsi égale à $M = \theta_1 \times nbre\_sauts + \theta_2 \times co\hat{u}t\_canaux + \theta_3 \times alter$, où *nbre_sauts* est égale au nombre de sauts sur la route, *coût_canaux* est égale à la somme des coûts sur chaque saut selon le canal attribué et *alter* représente le nombre de fois où, sur cette route, il y a un canal attribué en émission à un noeud sur la route qui est également utilisé par ce noeud pour recevoir des données.

*-> Mise à jour des tables de routage dans le cas des protocoles proactifs à état de liens*

Dans cette sous-catégorie de protocoles de routage, des messages de contrôle autres que les messages « hello » transportent des informations sur les voisinages des noeuds permettant à chaque noeud de mettre sa table de routage à jour. Nous les appellerons ci-dessous messages "Dissémination". Ces messages "Dissémination" sont en général générés par des noeuds particuliers du réseau. Par exemple pour le protocole OLSR, ce seront les noeuds MPR (en anglais « Multi-Point Relay ») qui envoient les messages "Dissémination", encore appelés messages "TC".

Les tables de routage indiquent une ou des destinations D. Et pour chaque destination figurent dans la table de routage une valeur de métrique calculée pour la route retenue vers la destination D ainsi que l'identité du prochain saut pour cette route vers D.

Dans un protocole proactif à état de lien, la valeur de la métrique M pour une route est définie par la formule $M = \theta_1 \times F(nbre\_sauts; \acute{e}tats\_liens) + \theta_2 \times co\hat{u}t\_canaux + \theta_3 \times alter$ : le poids $\theta_1$ pondère ainsi une variable dépendant non seulement du nombre de sauts de la route, mais également d'autres paramètres tels que les états des liens sur la route. Donc pour un protocole proactif à état de liens, sous l'appellation *nbre_sauts*, nous intégrerons également l'état des liens. Mais pour la solution proposée, cela est transparent car la métrique *nbre_sauts*, est celle qui est classiquement utilisée par le protocole de routage considéré et donc fournie par celui-ci.

Ainsi pour une destination D donnée, lorsqu'un noeud Nx reçoit des messages "dissémination", il met à jour sa table de routage par un procédé similaire à celui décrit précédemment pour les protocoles proactifs à vecteur de distance, à la méthode de calcul de la variable *nbre_sauts* de la métrique M près.

Dans des modes de réalisation, la métrique M pour le routage est en outre fonction d'une métrique classique indiquant le nombre total de sauts sur une route donnée (représentant la consommation de ressources dans le réseau) et/ou d'une métrique représentant la somme de tous les coûts des canaux utilisés par la route considérée (évaluant l'utilisation sur la route des canaux les plus disponibles et les moins chargés dans l'entourage des noeuds de la route).

La métrique alter dans l'exemple décrit ci-dessus représente le nombre de fois (nbre_1) où il y a un canal attribué en émission à un noeud sur la route qui est également utilisé par le noeud pour recevoir des données.

Dans un autre mode de réalisation, la métrique « alter » représente le nombre de fois (nbre_2) où il y a un canal attribué à la réception d'un noeud sur la route est également utilisé par le noeud pour émettre des données.

Dans un autre mode de réalisation, la métrique alter est la somme des deux nombres précédents (nbre_1 + nbre_2).

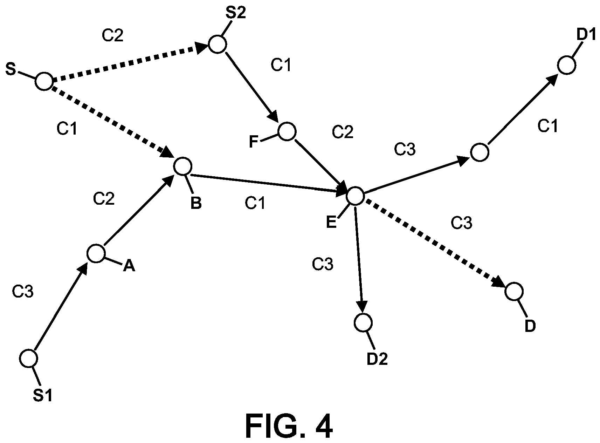

La figure 4 illustre un exemple de calcul de la métrique alter dans un mode de réalisation.

Soit un réseau de communication sans fil comportant les noeuds de communication S, S2, A, B, F qui ont chacun deux interfaces, le noeud E qui a 3 interfaces et les noeuds S1, D2, D, D1 qui ont chacun une interface.

Considérons que deux communications sont déjà établies, l'une sur la route indiquée par les flèches reliant des noeuds entre le noeud source S1 et le noeud destinataire D1 et l'autre sur la route indiquée par les flèches reliant des noeuds entre le noeud source S2 et le noeud destinataire D2.

Le canal Ci (avec i compris entre 1 et 3) utilisé sur chaque saut mis en oeuvre pour ces communications est indiqué sur la figure à proximité du saut.

Le noeuds S cherche une route vers le noeuds D.

Il se voit proposer les deux routes candidates suivantes : (S-B-E-D) et (S-S2-F-E-D). Ces routes sont représentées en flèches pointillées sur le schéma avec les canaux, affectés aux différents liens, indiqués à proximité des liens.

La métrique alter des deux routes candidates est respectivement calculée comme suit :

Pour la route (S-B-E-D) : il y a un seul noeud, B, qui émettra et recevra sur un même canal (C1) affecté au noeud pour la route, donc alter =1;

Pour la route (S-S2-F-E-D) : aucun noeud ne sera amené à émettre et recevoir sur un même canal donc alter =0.

Le fait qu'un noeud sera amené à émettre et recevoir sur un même canal sur une route, est détecté par le dit noeud lors de la phase de sélection de route. Et ce noeud incrémentera de 1 la métrique totale alter de la route pour signifier ce fait. Ce contrôle est effectué par chaque noeud intermédiaire d'une route.

Quel que soit le type de protocole de routage considéré, dans un mode de réalisation, tout noeud peut changer l'interface (et donc le canal) engagée dans une communication déjà établie, sans perturber celle-ci, s'il dispose d'une interface (et donc un canal) en meilleur état que celle actuellement utilisée (par exemple dans le cas où une baisse de charge a eu lieu sur cette interface pendant la transmission de données de la communication). Dans un mode de réalisation, l'interface n'est changée que si cela permet une baisse du coût relatif au saut de 10% au moins.

Un noeud peut changer une route sans la casser, juste en changeant l'interface et donc le canal engagé dans la communication considérée. Ainsi, on améliore la route trouvée sans avoir à faire une autre recherche de route et donc sans avoir à interrompre la communication avant de la rétablir.

Dans un mode de réalisation, chaque noeud vérifie s'il est nécessaire d'effectuer un changement d'interface après un temps R aléatoire, afin d'éviter une synchronisation entre les noeuds.

Dans un mode de réalisation, si un noeud Nx rencontre un conflit avec les canaux utilisés dans son entourage, par exemple s'il est obligé d'émettre et de recevoir sur le même canal (alors qu'il a une autre interface disponible) suite à des communications croisées (c'est-à-dire que ce noeud est utilisé pour router des paquets de plusieurs communications), il remonte un paquet « Conflit », sur le canal commun C1, vers les noeuds intermédiaires de la route qui le précèdent vers le noeud source, pour demander une modification, si possible, des canaux qu'ils utilisent afin qu'il puisse également modifier les siens, en changeant d'interfaces, et résoudre son conflit.

Un procédé de sélection de route et/ou un procédé de sélection de canaux selon l'invention sont particulièrement avantageux dans le cas des réseaux multi-interfaces et multi-canaux car ils permettent d'exploiter pour le choix des routes la diversité fréquentielle existant dans ces réseaux.

De plus, ils conviennent, que les noeuds aient le même nombre d'interfaces ou non.

Certaines au moins des étapes mises en oeuvre par les noeuds dans la sélection des canaux ou le routage selon l'invention sont dans un mode de réalisation mises en oeuvre suite à l'exécution sur des moyens de calcul des noeuds d'instructions de programmes d'ordinateur.

Ainsi, les procédés de sélection de canaux et de route selon l'invention permettent d'accroître le débit de transmission dans un réseau.

Un procédé de sélection de route selon l'invention peut être inclus dans tout type de protocole de routage. Il peut notamment être combiné à un module de couche MAC qui met à disposition de la couche de routage des informations sur l'identité et la qualité des canaux.

Suivant les modes de réalisation, un procédé de sélection de route selon l'invention et un procédé de sélection des canaux selon l'invention peuvent être mis en oeuvre au sein d'un même réseau ad hoc ou indépendamment l'un de l'autre. Par exemple, dans un mode de réalisation, un protocole de routage de l'art antérieur tel que AODV est mis en oeuvre dans un réseau ad hoc dans lequel la sélection des canaux est réalisée dans un mode de réalisation de l'invention.

Dans un autre mode de réalisation, un procédé de sélection de route selon l'invention est mis en oeuvre dans un réseau ad hoc dans lequel la sélection des canaux est effectuée comme décrit dans Adya et al. cité précédemment.

**Revendications**

1. Procédé de sélection d'une route dans un réseau sans fil (1) comprenant une pluralité de noeuds (N), ledit procédé comprenant :

   - calcul d'une valeur de métrique pour chaque route parmi un ensemble de routes candidates, chaque route parmi un ensemble de routes candidates étant définie par:

      - une liste ordonnée de noeuds;
      - pour chaque noeud de la liste, un canal d'émission et un canal de réception, le canal de réception étant pour recevoir depuis un autre noeud, le canal d'émission étant choisi de préférence distinct du canal de réception par ledit noeud pour émettre vers l'autre noeud;

   - sélection d'une route parmi les routes candidates, la route sélectionnée étant celle dont la valeur de métrique calculée est minimum ;**caractérisé en ce que** ledit calcul de valeur de métrique comprend une détermination du nombre de noeuds de ladite route pour lesquels le canal d'émission et le canal de réception sont identiques.

2. Procédé selon la revendication 1, selon lequel la métrique (M) est en outre fonction d'un deuxième paramètre indiquant la charge et/ou la qualité de la route.

3. Procédé selon l'une quelconque des revendications 1 à 2, selon lequel la métrique (M) est en outre fonction d'un troisième paramètre indiquant le nombre de noeuds de la route.

4. Procédé selon l'une quelconque des revendications 1 à 3, **caractérisé en ce qu'**il comprend une étape de choix d'un canal entre un noeud intermédiaire source et un noeud intermédiaire destinataire d'une route, lesdits noeuds intermédiaires source et destinataire étant des noeuds successifs de la liste ordonnée définissant la route, selon lequel lors de l'étape de choix, ledit noeud intermédiaire destinataire, respectivement source, transmet audit noeud intermédiaire source, respectivement destinataire, un message comprenant au moins un canal préféré, un canal préféré étant un canal associé à chacun desdits noeuds intermédiaires source et destinataire et non attribué pour l'émission, respectivement pour la réception, d'une communication par le noeud intermédiaire destinataire, respectivement source.

5. Procédé selon la revendication 4, **caractérisé en ce que**, lors de ladite étape de choix, ledit noeud intermédiaire source, respectivement destinataire, choisit en priorité comme canal d'émission dudit noeud intermédiaire source vers ledit noeud intermédiaire destinataire, l'un desdits canaux préférés qui n'est pas attribué audit noeud intermédiaire source, respectivement destinataire pour recevoir, respectivement émettre, une communication.

6. Procédé selon l'une quelconque des revendications précédentes, selon lequel l'établissement d'une route depuis le noeud destinataire vers le noeud source comprend les étapes suivantes :

   - ordonnancement en sens inverse des noeuds de la liste définissant la route sélectionnée depuis le noeuds source vers le noeuds destinataire ;
   - définition de la route depuis le noeud destinataire vers le noeud source par ladite liste ordonnée en sens inverse, le canal choisi pour émettre entre deux noeuds successifs de ladite liste ordonnée en sens inverse étant choisi en priorité différent du canal choisi entre lesdits deux noeuds successifs pour la route depuis le noeud source vers le noeud destinataire.

7. Station (N) adapté pour former un premier noeud d'un réseau sans fil (1) de communication comportant des noeuds (N) émetteurs/récepteurs, la station comprenant :

   - des moyens pour calculer une valeur de métrique pour chaque route parmi un ensemble de routes candidates, chaque route parmi un ensemble de routes candidates étant définie par

      - une liste ordonnée de noeud et

- pour chaque noeud de la liste, un canal d'émission et un canal de réception, le canal de réception étant pour recevoir depuis un autre noeud, le canal d'émission étant choisi de préférence distinct du canal de réception par ledit noeud pour émettre vers l'autre noeud;

- des moyens pour sélectionner une route parmi les routes candidates, la route sélectionnée étant celle dont la valeur de métrique calculée est minimum

**caractérisée en ce que** le calcul de la métrique comprend une détermination du nombre de noeuds de ladite route pour lesquels le canal d'émission et le canal de réception sont identiques.

8. Programme d'ordinateur comprenant des instructions de code de programme pour l'exécution des étapes du procédé selon l'une quelconque des revendications 1 à 6 lorsque ledit programme est exécuté sur un ordinateur.

9. Support d'enregistrement sur lequel est stocké un programme d'ordinateur selon la revendication 8.

**Patentansprüche**

1. Verfahren zur Auswahl einer Route in einem drahtlosen Netz (1), das mehrere Knoten (N) umfasst, wobei das Verfahren umfasst:

- Berechnung eines Metrikwertes für jede Route aus einer Menge von Kandidatenrouten, wobei jede Route aus einer Menge von Kandidatenrouten definiert ist durch:

- eine geordnete Liste von Knoten,
- für jeden Knoten der Liste, einen Sendekanal und einen Empfangskanal, wobei der Empfangskanal zum Empfangen von einem anderen Knoten bestimmt ist, wobei der Sendekanal vorzugsweise verschieden von dem Kanal des Empfangs durch den Knoten gewählt ist, um an den anderen Knoten zu senden,

- Auswahl einer Route aus den Kandidatenrouten, wobei die ausgewählte Route diejenige ist, deren berechneter Metrikwert minimal ist;

**dadurch gekennzeichnet, dass** die Berechnung des Metrikwertes eine Bestimmung der Anzahl der Knoten der Route umfasst, für welche der Sendekanal und der Empfangskanal identisch sind.

2. Verfahren nach Anspruch 1, wobei die Metrik (M) außerdem von einem zweiten Parameter abhängig ist, der die Belastung und/oder die Qualität der Route angibt.

3. Verfahren nach einem der Ansprüche 1 bis 2, wobei die Metrik (M) außerdem von einem dritten Parameter abhängig ist, der die Anzahl der Knoten der Route angibt.

4. Verfahren nach einem der Ansprüche 1 bis 3, **dadurch gekennzeichnet, dass** es einen Schritt der Wahl eines Kanals zwischen einem Quell-Zwischenknoten und einem Ziel-Zwischenknoten einer Route umfasst, wobei der Quell- und der Ziel-Zwischenknoten aufeinander folgende Knoten der geordneten Liste sind, welche die Route definiert, wobei im Schritt der Wahl der Ziel- bzw. Quell-Zwischenknoten zu dem Quell- bzw. Ziel-Zwischenknoten eine Nachricht überträgt, die wenigstens einen bevorzugten Kanal umfasst, wobei ein bevorzugter Kanal ein Kanal ist, der sowohl dem Quell- als auch dem Ziel-Zwischenknoten zugeordnet ist und nicht für das Senden bzw. für den Empfang einer Kommunikation durch den Ziel- bzw. Quell-Zwischenknoten zugewiesen ist.

5. Verfahren nach Anspruch 4, **dadurch gekennzeichnet, dass** im Schritt der Wahl der Quell- bzw. Ziel-Zwischenknoten als Sendekanal des Quell-Zwischenknotens zu dem Ziel-Zwischenknoten vorrangig einen der bevorzugten Kanäle wählt, die nicht dem Quell- bzw. Ziel-Zwischenknoten zugewiesen sind, um eine Kommunikation zu empfangen bzw. zu senden.

6. Verfahren nach einem der vorhergehenden Ansprüche, wobei die Erstellung einer Route vom Zielknoten zum Quellknoten die folgenden Schritte umfasst:

- Ordnen der Knoten der Liste, welche die ausgewählte Route vom Quellknoten zum Zielknoten definiert, in umgekehrter Reihenfolge;
- Definition der Route vom Zielknoten zum Quellknoten durch die in umgekehrter Reihenfolge geordnete Liste, wobei der Kanal, der zum Senden zwischen zwei aufeinander folgenden Knoten der in umgekehrter Reihenfolge geordnete Liste gewählt wird, vorrangig verschieden von dem Kanal gewählt wird, der zwischen den zwei aufeinander folgenden Knoten für die Route vom Quellknoten zum Zielknoten gewählt wird.

7. Station (N), die dafür ausgelegt ist, einen ersten Knoten eines drahtlosen Kommunikationsnetzes (1) zu bilden, welches Sende-/Empfangsknoten (N) aufweist,
wobei die Station umfasst:

- Mittel zum Berechnen eines Metrikwertes für jede Route aus einer Menge von Kandidatenrouten, wobei jede Route aus einer Menge von Kandidatenrouten definiert ist durch

- eine geordnete Liste von Knoten und
- für jeden Knoten der Liste, einen Sendekanal und einen Empfangskanal, wobei der Empfangskanal zum Empfangen von einem anderen Knoten bestimmt ist, wobei der Sendekanal vorzugsweise verschieden von dem Kanal des Empfangs durch den Knoten gewählt ist, um an den anderen Knoten zu senden,

- Mittel zum Auswählen einer Route aus den Kandidatenrouten, wobei die ausgewählte Route diejenige ist, deren berechneter Metrikwert minimal ist;

**dadurch gekennzeichnet, dass** die Berechnung der Metrik eine Bestimmung der Anzahl der Knoten der Route umfasst, für welche der Sendekanal und der Empfangskanal identisch sind.

8. Computerprogramm, welches Programmcodeanweisungen für die Ausführung der Schritte des Verfahrens nach einem der Ansprüche 1 bis 6, wenn das Programm auf einem Computer ausgeführt wird, umfasst.

9. Aufzeichnungsmedium, auf dem ein Computerprogramm nach Anspruch 8 gespeichert ist.

## Claims

1. Method of selecting a route in a wireless network (1) comprising a plurality of nodes (N),
said method comprising:

- calculation of a metric value for each route from among a set of candidate routes, each route from among a set of candidate routes being defined by:

- an ordered list of nodes;
- for each node of the list, a sending channel and a receiving channel, the receiving channel being for receiving from another node, the sending channel being chosen preferably distinct from the receiving channel by said node to send to the other node;

- selection of a route from among the candidate routes, the route selected being that whose calculated metric value is a minimum; **characterized in that** said metric value calculation comprises a determination of the number of nodes of said route for which the sending channel and the receiving channel are identical.

2. Method according to Claim 1, according to which the metric (M) is furthermore dependent on a second parameter indicating the loading and/or the quality of the route.

3. Method according to either one of Claims 1 or 2, according to which the metric (M) is furthermore dependent on a third parameter indicating the number of nodes of the route.

4. Method according to any one of Claims 1 to 3, **characterized in that** it comprises a step of choosing a channel between a source intermediate node and a recipient intermediate node of a route, said source and recipient intermediate nodes being successive nodes of the ordered list defining the route,
according to which during the choosing step, said recipient, respectively source, intermediate node transmits to said source, respectively recipient, intermediate node a message comprising at least one preferred channel, a preferred channel being a channel associated with each of said source and recipient intermediate nodes and not allocated for the sending, respectively for the receiving, of a communication by the recipient, respectively source, intermediate node.

5. Method according to Claim 4, **characterized in that**, during said choosing step, said source, respectively recipient, intermediate node chooses by priority as sending channel from said source intermediate node to said recipient intermediate node, one of said preferred channels which is not allocated to said source, respectively recipient intermediate node to receive, respectively send, a communication.

6. Method according to any one of the preceding claims, according to which the establishment of a route from the recipient node to the source node comprises the following steps:

- reverse ordering of the nodes of the list defining the selected route from the source node to the recipient node;
- definition of the route from the recipient node to the source node by said reverse ordered list, the channel chosen to send between two successive nodes of said reverse ordered list being chosen under different priority from the channel chosen between said two successive nodes for the route from the source node to the recipient node.

7. Station (N) adapted for forming a first node of a wireless communication network (1) comprising sender/receiver nodes (N),
the station comprising:

- means for calculating a metric value for each route from among a set of candidate routes, each route from among a set of candidate routes being defined by

- an ordered list of nodes; and
- for each node of the list, a sending channel and a receiving channel, the receiving channel being for receiving from another node, the sending channel being chosen preferably distinct from the receiving channel by said node to send to the other node;

- means for selecting a route from among the candidate routes, the route selected being that whose calculated metric value is a minimum

**characterized in that** the calculation of the metric comprises a determination of the number of nodes of said route for which the sending channel and the receiving channel are identical.

8. Computer program comprising program code instructions for the execution of the steps of the method according to any one of Claims 1 to 6 when said program is executed on a computer.

9. Recording medium on which a computer program according to Claim 8 is stored.

# FIG. 1

# FIG. 2

N

E/R — 5

4
4

INT

4

TRAIT. (M)

3

T

# FIG. 3

$T_{Cn}$

$T_{C2}$

$T_{C1}$

$T_{Nx}$

"current_load($N_x$;C1)"

"last_load($N_x$;C1)"

"load($N_x$;C1)"

"PER(C1)"$_{Ny \to Nx}$

"dispo($N_x$;C1)"
"Em($N_x$;C1)","Rec($N_x$;C1)"

"Cost(C1)"$_{Ny \to Nx}$

# FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2895626 A

**Littérature non-brevet citée dans la description**

- **PRADEEP KYASANUR ; NITIN H. VAIDYA.** Routing and Interface Assignment in Multi-Channel Multi-Interface Wireless Networks. *IEEE Wireless Communications and Networking Conference (WCNC),* Mars 2005

- **A. ADYA ; P. BAHL ; J. PADHYE ; A.WOLMAN ; L. ZHOUIN BROADNETS.** *A multi-radio unification protocol for IEEE 802.11 wireless networks,* 2004
- **DRAVES R et al.** *Routing in multi-radio multi-hop wireless mesh networks*